# EUROPEAN PATENT SPECIFICATION

(11) **EP 4 170 527 B1**
(45) Date of publication and mention of the grant of the patent: **26.11.2025**
(21) Application number: 22202286.5
(22) Date of filing: 18.10.2022
(51) Int. Cl.: G06F 21/32, H04L 9/40

(54) **AN AUTHENTICATION METHOD AND SYSTEM**
AUTHENTIFIZIERUNGSVERFAHREN UND -SYSTEM
PROCÉDÉ ET SYSTÈME D'AUTHENTIFICATION

(30) Priority: 19.10.2021 GB 202114905; 17.06.2022 GB 202208976
(43) Date of publication of application: 26.04.2023
(73) Proprietor: ValidSoft Limited, Dublin 2, 662881 (IE)
(72) Inventor: CARROLL, Patrick Matthew, Dublin 2, 662881 (IE); KORFF, Alexander, Dublin 2, 662881 (IE); KOCKMANN, Marcel, Dublin 2, 662881 (IE); KETTLE, Neil, Dublin 2, 662881 (IE); PETERSEN, John, Dublin 2, 662881 (IE)
(74) Representative: Marks & Clerk LLP

(56) References cited:
- EP-A1- 3 107 091
- US-A1- 2003 163 739
- US-A1- 2018 232 511
- US-A1- 2021 320 801

## Description

### FIELD

Embodiments described herein relate to authentication methods and systems, and in particular to an identity assurance authentication method and system.

### BACKGROUND

An authentication method involves verifying that an assertion, such as a user identity, is true. Authentication methods are used in various fields, including healthcare and banking, for example. A banking service provider may use an authentication method to protect access to an online account or to authorize a payment transaction. For example, a user may attempt to perform an online payment by providing their payment card details. An authentication method is then performed in order to verify that the user attempting to perform the transaction corresponds to the registered user identified by the payment card details. The user may be requested to speak some phrase, and a voice biometric analysis performed on the captured audio signal in order to authenticate the user. Authentication using voice biometrics can distinguish between a legitimate person and an imposter. In this example, the legitimate person is the person who owns the bank account from which the payment is being made and whose voice information is enrolled against that account. The voice biometric analysis involves comparing voice information extracted from the speech provided by the user with the stored voice information enrolled against the account. On determining that the voice information matches, the user is authenticated and the payment transaction is processed.

There is a continuing need for improved authentication methods and systems.

United States Patent Application Publication US2003/163739A1 relates to an authentication system that utilizes multi-factor user authentication. In an example, one authentication factor is the user's speech pattern, and another authentication factor is a one-time passcode. The speech pattern and the passcode may be provided via voice portal and/or browser input. The speech pattern is routed to a speaker verification subsystem, while the passcode is routed to a passcode validation subsystem. Many other combinations of input types are also possible. For heightened security, the two (or more) authentication factors are preferably, although not necessarily, provided over differing communication channels (i.e., they are out-of-band with respect to each other). If a user is authenticated by the multi-factor process, he is given access to one or more desired secured applications.

United States Patent Application Publication US2021/320801A1 relates to a method for verifying an individual's identity for granting access to a computer system that includes receiving a personal identifier of the individual and data related to the individual speaking an authentication sequence. The method includes performing a biometrics identity proof that includes: identifying a first set of characteristics from the data; retrieving, from a database, a second set characteristics linked to the personal identifier of the individual; and comparing the first set of characteristics against the second set of characteristics to determine a similarity score. The method includes performing a proof of possession of an authentication device that includes determining whether a recognized value of the authentication sequence matches an expected value of the authentication sequence. The method includes calculating a confidence score for verifying the individual's identity based the similarity score and whether a match was determined.

United States Patent Application Publication US2018/232511A1 relates to a device, system, and method of voice-based user authentication utilizing a challenge. A system includes a voice-based user-authentication unit, to authenticate a user based on a voice sample uttered by the user. A voice-related challenge generator operates to generate a voice-related challenge that induces the user to modify one or more vocal properties of the user. A reaction-to-challenge detector operates to detect a user-specific vocal modification in reaction to the voice-related challenge; by using a processor as well as an acoustic microphone, an optical microphone, or a hybrid acoustic-and-optical microphone. The voice-based user-authentication unit utilizes the user-specific vocal modification, that was detected as reaction to the voice-related challenge, as part of a user-authentication process.

European Patent Application Publication EP3107091A1 relates to a voiceprint authentication method and a voiceprint authentication apparatus. The method includes: displaying a tip text to a user, the tip text being a combination of a preregistered phrase; obtaining a speech of the tip text read by the user; obtaining a pre-established registration model and determining a result of a voiceprint authentication according to the speech of the tip text and the pre-established registration model, if the speech of the tip text corresponds to the tip text.

### BRIEF DESCRIPTION OF FIGURES

Systems and methods in accordance with non-limiting embodiments will now be described with reference to the accompanying figures in which:
Figure 1 is a schematic illustration of a system in accordance with an embodiment;
Figure 2A illustrates an example user interface prompting the user to provide an initiation input;
Figure 2B illustrates an example user interface provided during audio capture;
Figure 3A shows a flow chart of an authentication method according to an embodiment, where the user provides audio input via a web browser;
Figure 3B is a schematic illustration of a system according to an embodiment, comprising an authentication sever, a payment server, a merchant server and a customer device;
Figure 4A shows a flow chart of an authentication method according to an embodiment, where the user provides audio input via a registered user device;
Figure 4B is a schematic illustration of a system according to an embodiment, comprising an authentication sever, a payment server, a merchant server, a first customer device which is a desktop computer and a second customer device which is a registered user mobile device;
Figure 5 is a flow chart of an authentication method according to an embodiment;
Figure 6 is a schematic illustration of an authentication system according to an embodiment.

### DETAILED DESCRIPTION

According to a first aspect, there is provided an authentication method, comprising:
obtaining a string;
receiving an audio signal;
performing speech recognition on the audio signal to extract text; and
performing authentication of a user, the authentication comprising:
   comparing the extracted text and the string;
   performing voice authentication of the user based on the audio signal.

The authentication further comprises comparing timing information of the audio signal to reference timing information, wherein the user is not authenticated if the timing information does not satisfy the reference timing information.

In one example, the user is not authenticated if the extracted text and string do not match.

In one example, the string is a unique string or one time string. The audio signal comprises voice recording data.

In one example, the method further comprises receiving initiation information, wherein comparing the timing information comprises identifying a time difference between an initiation time and a time at which the first spoken element is detected in the audio signal, wherein the reference timing information comprises a predetermined threshold and the user is not authenticated if the time difference is longer than the predetermined threshold.

In one example, the method further comprises sending the unique string to a user device. In one example, the initiation time is the time at which the unique string is sent.

In one example, the user device is a device registered to the user.

In one example, the audio signal is received as a real-time audio stream from the user device. In one example, the method further comprises verifying that the audio signal is received as a continuous audio stream.

In one example, the speech recognition is performed in real-time as the audio stream is received.

In one example, the method further comprises determining, from the audio signal, the length of time taken for the user to speak the extracted text, wherein the reference timing information comprises a predetermined length of time, and wherein the authentication further comprises comparing the determined length of time to the predetermined length of time, wherein if the determined length of time is longer than the predetermined length of time, the user is not authenticated.

In one example, the predetermined length of time is calculated as an estimated time taken to read out loud the string.

In one example, comparing the timing information comprises identifying a time difference pattern between a plurality of spoken elements detected in the audio signal, wherein the reference timing information comprises a predetermined time difference pattern; and wherein the user is not authenticated if the time difference pattern is different to the predetermined time difference pattern.

In one example, the method further comprises instructing the user device to present an interface to initiate authentication.

In one example, the user device is instructed to present the interface following receipt of a transaction request.

In one example, the method further comprises sending the string to the user device for display on the user device in response to receiving initiation information from the user device.

In one example, one or more elements of the authentication process, including the authentication result, are hashed, encrypted, obfuscated and/or stored for future non-repudiation purposes.

In one example, the method further comprises generating the unique string using an algorithm comprising a one-way function. In a further example, the algorithm takes two or more numeric inputs. In a further example, at least one of the inputs comprises information relating to a transaction for which authentication is being performed.

In one example, the string comprises a random sequence of digits or a random natural language phrase.

In one example, the method further comprises performing a determination as to whether speech in the audio signal is computer-generated.

In one example, the method further comprises performing a determination as to whether speech in the audio signal is generated by replaying a recording.

In one example, the method further comprises sending an instruction to the user device to stop displaying the string.

In one example, the method further comprises in response to receiving an initiation input at the user device, sending initiation information from the user device to a server displaying the received string on the user device while the initiation input is being provided by the user; and capturing the audio signal while the initiation input is being provided by the user.

In some examples, the above methods integrate voice biometric authentication with a one-time passcode to provide improved security against spoofing attacks, and thus provide a secure authentication method.

The methods are computer-implemented methods. Since some methods in accordance with embodiments can be implemented by software, some embodiments encompass computer code provided on any suitable carrier medium. The carrier medium can comprise any storage medium such as a CD ROM, a magnetic device or a programmable memory device, or any transient medium such as any signal e.g. an electrical, optical or microwave signal. The carrier medium may comprise a non-transitory computer readable storage medium.

According to another aspect, there is provided a system for performing an authentication method, the system comprising a server configured to carry out any of the above methods. In one example, the system further comprises a user device.

According to another aspect, there is provided a computer program comprising instructions that, when executed by a processor, cause the processor to carry out any of the above methods.

According to another aspect, there is provided a carrier medium comprising computer readable code configured to cause a computer to perform any of the above methods.

According to another aspect, there is provided a system, comprising:
one or more processors, the one or more processors being configured to:
obtain a string;
receive an audio signal from a user device;
perform speech recognition on the audio signal to extract text; and
perform authentication of the user, the authentication comprising:
   comparing the extracted text and the string; and
   performing voice authentication of the user based on the audio signal.

In one example, the authentication further comprises comparing timing information corresponding to the audio signal to reference timing information.

In one example, the user is not authenticated if the timing information does not satisfy the reference timing information.

Two-factor authentication methods in digital communication systems can be used to authenticate a user, for example to provide access to secure files or user accounts, or to approve financial transactions. Strong, two factor authentication can be used for authentication of payment processes over the internet for example, and is required by regulations such as PSD/2. Payment providers may implement two-factor authentication by adding a second layer of authentication to the existing authentication method, where the existing authentication method may be based on a username and password for example. This second layer of authentication may comprise a one-time-passcode that is sent to, or generated from, a previously registered user device such as a mobile phone, acting as a personal possession factor.

However, in such cases, the existing authentication method using the password is simply appended with a second layer. Passwords are inconvenient to use and often insecure due to how they are handled. Secure passwords can't easily be remembered, often resulting in weak passwords that can easily be guessed. Passwords may also be stolen by system breaches or phishing attacks.

Use of biometrics for authentication is a convenient and secure alternative to passwords. For example, voice biometric authentication is a secure and convenient method of authentication, which uses the unique characteristics of the human vocal tract. Other examples of biometric factors include use of fingerprint and face sensors in mobile devices such as smart phones. With biometric authentication, the user does not have to remember or select a password in the first place. For example, voice biometric authentication can determine whether an audio signal corresponds to speech spoken by a legitimate person, where the legitimate person is the person who owns the claimed identity and whose voice print is enrolled against that identity. A voice biometric authentication method may comprise receiving an authentication request corresponding to a user, the request comprising information specifying the claimed identity. This information is then used to retrieve a stored template, or voice print, corresponding to the identity claimed by the user. The user is then requested to speak, and an audio signal received. Voice information is extracted from the audio signal and compared to the stored template. The voice information may comprise information specifying various characteristics of the user voice, such as pitch, cadence, tone, pronunciation, emphasis, speed of speech, and accent. The unique vocal tract and behaviour of each person results in distinct voice information that allows verification of the person using the stored template. The voice biometric authentication may be text dependent, in which case a specific phrase is requested to be spoken each time, which is the same as that which was used during enrolment of the user to generate the stored voice template. The voice biometric authentication may be alternatively be text independent, in which case the user can speak a different text during authentication to that used during enrolment.

However, a threat to such biometric authentication methods is spoofing attacks. In the case of voice biometrics, attackers may try to mimic, record or synthetically re-create the voice of the legitimate user. For example, a first method which can be used to attempt to deceive a voice biometric based authentication method is a replay attack. This involves an imposter obtaining a recording of the legitimate person's voice and replaying the recording through a microphone to provide the audio signal. A second method which is used to attempt to deceive a voice biometric based authentication is a synthesis attack. A synthesis attack uses an algorithm, such as a trained text to speech (TTS) model, to provide computer generated speech that simulates the legitimate user's voice. As technology improves, in particular in the area of deep-neural-networks, such deepfakes become an ever growing threat to biometric authentication.

The systems and methods described herein may address the above security vulnerabilities by providing voice biometric solutions alongside a one-time passcode, where voice biometric analysis and text analysis are performed on the same voice recording. In particular, a unique one-time passcode is obtained. An audio signal comprising voice recording data is then received from a user device. Speech recognition is performed on the voice recording data to extract text. Authentication of the user is performed by comparing the extracted text and the unique one time-passcode, and performing voice biometric authentication of the user based on the voice recording data. The user is then authenticated only if both the voice of the user is authenticated from the biometric analysis, and the text extracted from the voice recording matches the text string expected by the authentication system. Attackers wishing to spoof the system would therefore be required to not only provide a signal approximating the voice of the user, but to provide that voice reading the unique string.

Additional security may also be provided by utilizing timing information of the voice recording data. While voice synthesis technologies exist, even the best techniques require a finite amount of time to synthesize audio that can mimic a human voice with sufficient accuracy to fool a biometric authentication. The authentication system analyses the voice data to identify timing information, which is then compared with reference timing information to determine whether the speech was spoken by a real human. A text to speech synthesis algorithm will take some measurable amount of time, distinguishable from network latency and natural variations, to render the synthetic speech as a waveform so that the attacker is able to inject it into an audio stream. This can be detected by analyzing timing information of the received audio. For example, it may take too long for the first word to be received, indicating that a speech synthesis algorithm may have been used, or the whole utterance may take too long to be spoken in total, again indicating that a speech synthesis algorithm may have been used. Timing information such as the length of time before the first word is received or the length of time to receive the whole utterance may be compared to reference timing information to confirm that voice data is provided to an authentication server within a shorter time period than that required by voice synthesis technologies to synthesize speech from text.

Additional security may also be provided by sending the one-time passcode to a previously registered user device, such as a mobile phone, which acts as a personal possession factor. This provides a strong two-factor authentication.

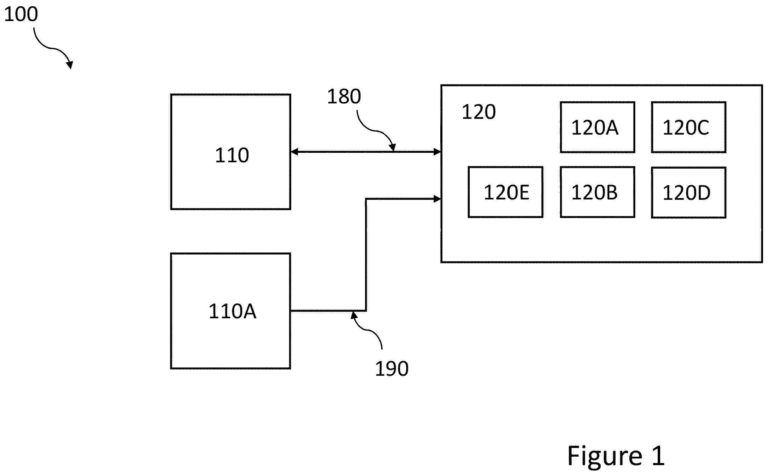

Figure 1 shows a system 100 according to an embodiment, which is configured to implement an authentication method, such as those described herein. System 100 includes a user device 110 and an authentication server 120. The authentication server 120 may include one or more analysis modules, including an Automatic Speech Recognition (ASR) module 120A, voice biometrics module 120B, replay detection module 120C, synthesis detection module 120D, and timing comparison module 120E. Each analysis module is configured to perform analysis on received audio data, as described in more detail below.

The user device 110 may be any form of user device, such as a desktop or laptop computer or a mobile device such as a smart phone or tablet. The user device 110 is configured to communicate with the authentication server 120. For example, the user device 110 may communicate with the authentication server 120 over communication channel 180 via a web browser or via dedicated software such as an app.

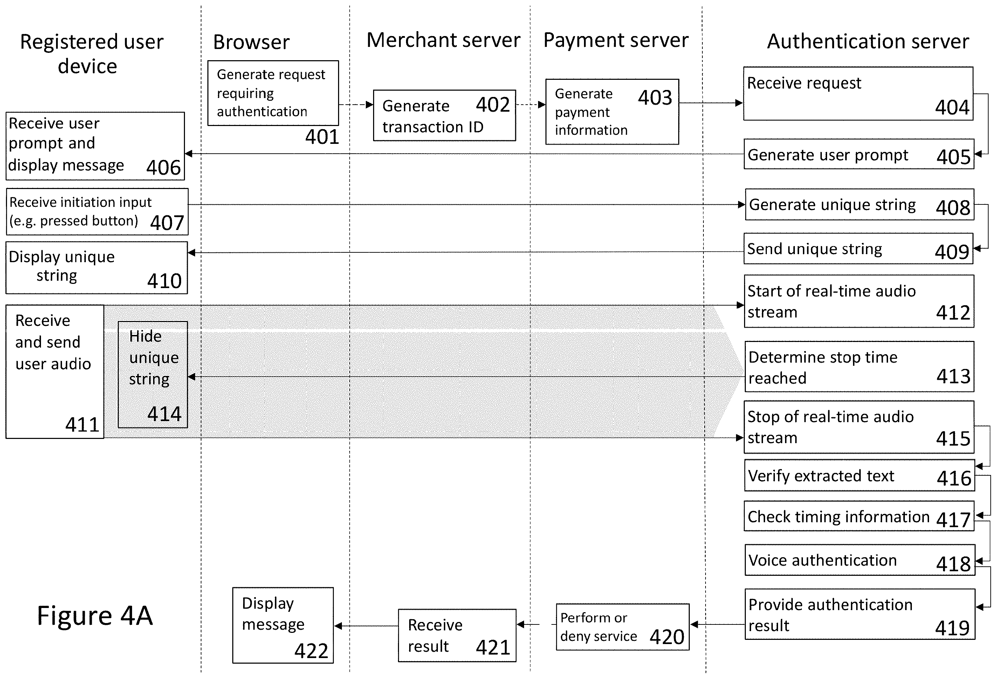

System 100 may optionally include a registered user device 110A separate to the user device 110. The registered user device 110A may be a mobile device, such as a smart phone, tablet or smart watch for example. The registered user device 110A is also configured to communicate with the authentication server 120. For example, the registered user device 110A may communicate with the authentication server 120 over a separate communication channel 190 via dedicated software such as an app. The registered user device 110A may be used in order to authenticate a transaction or interaction which was separately initiated by the user device 110 for example. The use of a separate registered user device 110A serves as a separate possession authentication factor. As described below in more detail in connection with Figure 4A, various steps of the authentication method may be performed between registered user device 110A and authentication server 120 when a registered user device 110A is employed.

The authentication server 120 is configured to implement an authentication method, such as those described herein. The authentication method includes obtaining a unique string. The string may be generated at the authentication server 120, as will be described in more detail below. The unique string is a one-time string, in other words it is generated for use in a single authentication method. For each new authentication method, a new string is obtained. As part of the authentication method, the user is sent the unique string and requested to speak the string. The string may be sent to user device 110. The authentication server 120 then analyses an audio signal received from the user device 110 to confirm whether that audio signal contains speech corresponding to the unique string which was sent. The user device 110 captures and sends an audio signal including voice recording data to the authentication server 120. The authentication server 120 receives the voice recording data from the user device 110 over the communication channel 180 and analyses it to perform authentication. Where a registered user device 110A is employed, the string is sent to registered user device 110A, and the registered user device 110A captures and sends an audio signal including voice recording data to the authentication server 120, where it is analysed in the same manner.

The user device 110 is provided with one or more audio capture systems, such as a microphone, configured to capture the voice recording data. The voice recording data captured by the user device 110 is transmitted from the user device 110 to the authentication server 120. The transmission is performed in real-time in the form of an audio stream over the communication channel 180. Where a registered user device 110A is employed, the registered user device 110A is additionally or alternatively provided with one or more audio capture systems, such as a microphone, configured to capture the voice recording data, and performs the transmission of audio to the authentication server 120.

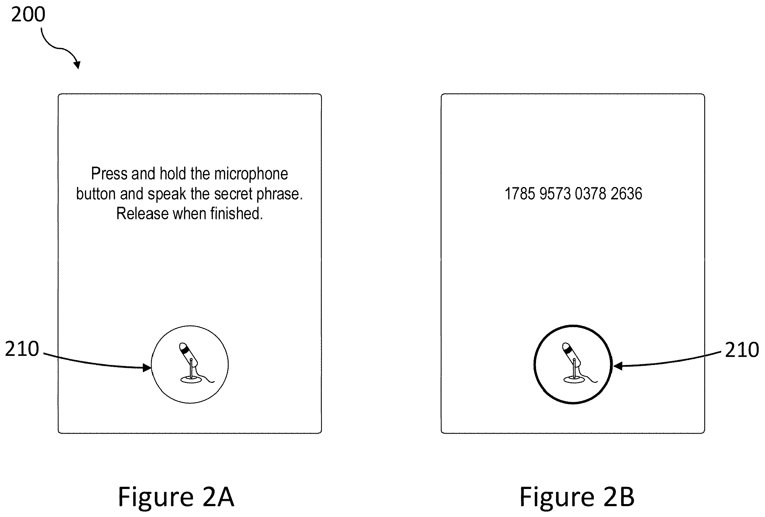

The user device 110 is also provided with a display, on which the received unique string is displayed to the user. In one example, the user device 110 comprises a manual user input component, configured to receive an initiation input from the user. For example, the user device 110 may comprise a touchscreen, which acts as both a display and the manual user input component. Figures 2A and 2B illustrate one example of how the user may be provided with the unique string, and how the user may provide an initiation input, through a touchscreen. In this example, a user interface 200 is displayed on the touchscreen of the user device 110. The user interface includes an interface element 210, which is a button provided on the touchscreen. Figure 2A shows the user interface just before capturing audio from the user. The user interface displays an instruction to "Press and hold the microphone button and speak the secret phrase. Release when finished". As illustrated in Figure 2B, whilst the user presses the microphone button 210, the unique string "1785 9573 0378 2636" is displayed on the display and voice recording capture is initiated. Figure 2B illustrates the user interface while the user is pressing and holding the recording button 210 and thus unveiling the unique passphrase. While the button is held, the unique string is displayed and the voice recording remains active. As soon as the user releases the button the unique string disappears and the voice recording stops. The interface of Figure 2A may then be displayed again, or a different interface may be displayed. The interfaces shown in Figures 2A and 2B are one example - alternative interfaces may be provided. Furthermore, alternative manual user input components may be provided to allow the user to interact with the system to show the unique code and to initiate voice recording. For example, when the user device is a desktop computer, the manual user input component may be a keyboard, and the user may be prompted through the display to press and hold a key on the keyboard to initiate voice recording and to display the unique string. Where a registered user device 110A is employed, the registered user device 110A is additionally or alternatively provided with the display and the manual user input component, for example a touchscreen.

Requiring the user to actively provide some manual interaction with the user device 110 or registered user device 110A in order for the audio capture to be performed further mitigates against an attacker who attempts to spoof the system by use of a text to speech synthesis based approach. For example, the attacker would need to press and hold the button 210 to start recording audio. The passcode is then displayed on the user device 110. An attacker may then enter the passcode text manually into a separate device - this may take several seconds, where the attacker is hampered by still needing to hold the button 210 at the same time. Speech is then generated from the text using a TTS algorithm, where this make take another few seconds taking into account network traffic. Then, the attacker opens the audio file on the separate device and plays it back via a loudspeaker into the user device 110 - again, still needing to hold the button 210. Requiring the user to actively provide some manual interaction with the user device 110 may result in some delay in an attacker providing an audio signal, which can then be detected in the received audio in the manner which will be described below. For example, by the time the attacker is able to perform the actions, a reference time period for the entire duration of the speech is likely to be totally lapsed.

The authentication server 120 is configured to perform automatic speech recognition ASR on the voice recording data to extract text. Various methods of ASR are suitable for use in this step. For example, a trained speech recognition algorithm based on a neural network or Hidden Markov Model may be used. An example method of ASR which may be employed is described in "Deep Neural Networks for Acoustic Modeling in Speech Recognition", Hinton et al., IEEE Signal Processing Magazine, Volume: 29, Issue: 6, Nov. 2012. Another example method of ASR which may be employed is described in "Recent Advances in End-to-End Automatic Speech Recognition", Jinyu Li, arXiv:2111.01690. The received audio signal is taken as input to an ASR module 120A of the authentication server 120, and the ASR module 120A performs the ASR algorithm. The ASR output may comprise the most probable text hypothesis corresponding to the audio signal as determined by the algorithm. The ASR algorithm is configured to detect natural language phrases as well as individual letters and digits spoken by the user.

The authentication server 120 is further configured to perform authentication of the user. The voice recording data received by the authentication server 120 is used to authenticate the user.

The authentication comprises comparing the extracted text obtained at the ASR module 120A and the unique string that was sent to the user. A match between the text extracted from the voice recording data and the unique string indicates a likelihood that the user device streaming the audio signal to the authentication server 120 is the same user device that received the unique string and that the user is authentic. This provides an additional level of security if the unique string is sent to a device previously registered to the user. Furthermore, an imposter does not have advance knowledge of the unique string, since it is a one-time code generated for the specific authentication process. If an imposter attempted to spoof the system by playing a previous recording of the user's voice, the text extracted from the received audio signal would not match the unique string. In one example, authentication of the user is provided only if the extracted text matches the unique string exactly. In other examples, some margin of difference may be allowed, to account for inaccuracies in the ASR. The comparison may be performed by the ASR module 120A. If the ASR module 120A determines that the extracted text does not match the unique string, the authentication fails. If the ASR module 120A determines that the extracted text does match the unique string, the ASR module 120A outputs information indicating that this check has been successful.

The authentication further comprises performing voice authentication of the user based on the voice recording data. Voice authentication may include performing voice biometric analysis. Voice biometric analysis compares voice information extracted from the voice recording data against a stored template. Voice biometric authentication is performed on at least a portion of the voice recording data received at the authentication server 120. For example, voice information extracted from at least a portion of the audio signal is analysed against a stored template, to provide a voice biometric score indicating the likelihood that the portion of the voice recording data corresponds to the stored template. A higher voice biometric score indicates that the portion of the audio signal is more likely to correspond to the stored voice print. The score is then compared to a threshold value. The threshold value may be a fixed pre-determined value. The threshold can be determined via a tuning process performed prior to deployment of the system, for example. **If** the biometric score for the portion does not meet the threshold, the authentication fails. If the biometric score meets the threshold, the voice biometrics module 120B outputs information indicating that this check has been successful. The portion of the voice recording data may be taken from any portion of the voice recording data, or the voice biometrics analysis may be performed on the entirety of the voice recording data.

The voice biometric analysis is performed by the voice biometrics module 120B of the authentication server 120. The voice biometric analysis uses a stored template, also referred to as a voice print, corresponding to a registered person. The voice biometrics module 120B comprises an algorithm that generates a digital representation of the distortion of sound caused by the speaker's physiology from an audio signal. This representation comprises a series of values, representing voice information. The values may be represented as float values, which are stored in a vector, referred to here as a voice information vector. The voice information comprises information specifying various characteristics of the user voice, such as pitch, cadence, tone, pronunciation, emphasis, speed of speech, and accent. The unique vocal tract and behaviour of each person results in distinct voice information that allows verification of the person using the stored template. The stored template is a vector comprising a set of values which were previously extracted from speech received from the registered user. Various methods of voice biometric authentication may be employed. An example method of voice biometric authentication which may be employed is described in "Automatic Speaker Recognition Using Gaussian Mixture Speaker Models", D Reynolds, pages 173 to 192, VOLUME B, NUMBER 2, 1995, THE LINCOLN LABORATORY JOURNAL. Another example method of voice biometric authentication which may be employed is described in "X-VECTORS: ROBUST DNN EMBEDDINGS FOR SPEAKER RECOGNITION", Snyder et al, 2018 IEEE International Conference on Acoustics, Speech and Signal Processing (ICASSP).

Optionally, the authentication may further comprise performing a determination as to whether speech in the voice recording data is generated by replaying a recording. This analysis may be performed by a replay detection module 120C of the authentication server 120. If the replay detection module 120C determines that the portion corresponds to a replay of a recording, the replay detection module 120C outputs information indicating that the authentication should fail. If the replay detection module 120C determines that the portion does not correspond to a replay of a recording, the replay detection module 120C outputs information indicating that this check has been successful. The portion of the voice recording data may be taken from any portion of the voice recording data, or the replay detection module 120C may analyse the entirety of the voice recording data. Various methods of determining whether an audio signal corresponds to a replayed recording may be used by the replay detection module 120C. For example, the replay detection module 120C may comprise a trained binary classification model that has been trained to classify whether an audio stream comprises a replay of a recording. Such a model may take as input a set of features extracted from the audio, and be trained on datasets comprising sets of features extracted from many audio signals generated by replaying a voice recording and many audio signals corresponding to live human speech. The input set of features may comprise some or all of the same voice information extracted by the voice biometrics module 120B for example. The replay detection module 120C may generate a score indicating the likelihood that the audio corresponds to a replay of a recording. This score is then compared to a threshold. If the replay detection score does not meet the threshold, the authentication fails. Other methods of replay detection may be used in this step. The replay detection module 120C may be a separate component from the voice biometrics module 120B. However, there may be overlap between the functionality performed by the voice biometric analysis and the replay detection analysis, and therefore in some examples, a combined analysis is performed. For example, the voice biometrics module 120B may perform the function of the replay detection module 120C. The replay detection may be performed by identifying anomalies in the digital representation that is generated as part of the voice biometrics analysis (the voice information vector). Anomalies that arise from use of a recording device can be detected in this representation.

Optionally, the authentication may further comprise performing a determination as to whether speech in the voice recording data is computer-generated. This analysis may be performed by a synthesis detection module 120D of the authentication server 120. If the synthesis detection module 120D determines that the portion corresponds to synthesised speech, the synthesis detection module outputs information indicating that the authentication should fail. If the synthesis detection module 120D determines that the portion does not correspond to synthesised speech, the synthesis detection module 120D outputs information indicating that this check has been successful. The portion of the voice recording data may be taken from any portion of the voice recording data, or the synthesis detection module 120D may analyse the entirety of the voice recording data. Various methods of determining whether an audio signal comprises computer generated speech can be used by the synthesis detection module 120D. For example, the synthesis detection module 120D may comprise a trained binary classifier model that has been trained to classify whether an audio stream comprises synthesised speech or whether it is provided by a human speaker. Such a model may take as input a set of features extracted from the voice recording data, and be trained on datasets comprising sets of features extracted from many audio signals generated by a text to speech algorithm and many audio signals corresponding to live human speech. The input set of features may comprise some or all of the same voice information extracted by the voice biometrics module 120B, for example. The synthesis detection module 120D may generate a score indicating the likelihood that the audio corresponds to synthesised speech. This score is then compared to a threshold. If the synthesis detection score does not meet the threshold, the authentication fails. Other methods of synthesis detection can be used in this step. The synthesis detection module 120D may be a separate component from the voice biometrics module 120B and from the replay detection module 120C. However, there may be overlap in the functionality performed by the voice biometric analysis and the synthesis detection analysis, and/or by the replay detection analysis and the synthesis detection analysis. In some examples, a combined analysis is performed. For example, the voice biometrics module 120B may perform the function of the synthesis detection module 120D.

The comparison of extracted text to the unique string in combination with the voice authentication provides an additional layer of security to the authentication method. An attacker would not only need to accurately synthesize the user's voice, but specifically synthesize the user's voice reading a unique string that is generated specifically for the authentication by the authentication server 120. Furthermore, in some examples, the unique string is provided to a registered user device 110A. In order to attack the system, the attacker would need to intercept communications between the authentication server 120 and the registered user device 110A, and then synthesize a voice recording. This increases the burden placed upon the attacker.

To provide additional security, the authentication further comprises comparing timing information corresponding to the voice recording data to reference timing information. The comparison is performed by the timing comparison module 120E of the authentication server 120. A finite amount of time must be spent by an attacker to synthesize speech corresponding to the unique string. While sophisticated algorithms, such as artificial intelligence computer programs, may synthesize a human voice with an accuracy which could deceive some biometric analysis methods, such algorithms take time to generate the audio from a provided text. The reference timing information specifies timing requirements on the voice recording data that an attacker would find very difficult, if not impossible, to meet with voice synthesis technology.

In order to perform the comparison of the timing information, the authentication server 120 receives, from the user device 110, initiation information. For example, the initiation information is data indicating that the user has pressed the button 210 shown in Figure 2A. For example, the user device 110 may send the initiation information to the authentication server 120 as soon as the user interacts with the interface element 210 of Figure 2A. The initiation information is data indicating that the user is ready to receive the unique string. In response to receiving the initiation information, the authentication server 120 sends the unique string to the user device 110. The authentication server 120 also records an initiation time, being the time at which the unique string is sent to the user device 110. In examples in which a registered user device 110A is employed, the initiation information is received from the user device 110A, and the unique string received from the user device 110A.

The voice recording data is received at the authentication server 120 as a real-time audio stream from the user device 110. In some examples, the authentication server 120 performs a determination to confirm that the audio is received as a continuous audio stream. This allows the authentication server 120 to detect an attacker attempting to spoof the authentication server 120 by synthesizing a completed audio file and sending it in one step, within an expected time frame (the pre-determined length of time described below). For example, the unique string may be a 16-digit phrase. The reference timing information stored by the authentication server 120 may specify that it is expected to take 8 seconds to speak the unique string - in other words, the reference timing information may comprise a pre-determined length of time which is 8 seconds. An attacker could take 5 seconds to synthesize speech corresponding to the 16 digits in the user voice, and then send the resulting audio file in a single packet (containing 8 seconds of audio), within the expected 8 second time frame. The authentication server 120 would then receive the audio file within 8 seconds. The authentication server 120 may therefore perform a check that the audio is received continuously throughout the audio capture period, so that the authentication server 120 is configured to detect such an attack. In some examples, the authentication server 120 verifies when the audio was received. For example, the audio stream may be expected to be received at the authentication server 120 in packets throughout the audio capture period. As each packet is received at the authentication server 120, it is timestamped with the received time at the authentication server 120. The authentication server 120 may confirm that the audio packets are received at a minimum rate. For example, the authentication server 120 may confirm that the audio packets are received at least every 50 milliseconds. The authentication server 120 may further confirm that each packet contains no more than an expected length of audio - for example, each packet contains audio corresponding to no more than the time period since the previous packet (or since the start of the audio capture, in the case of the first packet). For example, the authentication server 120 may confirm that the audio packets are received at least every 50 milliseconds, and that the audio packets comprise audio data corresponding to a time period of no more than 50 milliseconds. These constraints may be applied with some margin of error. In this manner, the authentication server 120 confirms that the audio is sent naturally - i.e. continuously through the audio capture period. In particular, the authentication server 120 performs a check designed to detect if an attacker has synthesized the audio first and then sent it in a smaller number of packets at a later point within the capture period.

In a first example, comparing the timing information comprises determining a time difference between an initiation time and a time at which the first spoken element is detected in the received voice recording data. In this example, the initiation time is the time at which the unique string is sent to the user from the authentication server 120. When the unique string is sent, the authentication server 120 records a time stamp as the initiation time. As part of the text extraction process performed by the ASR module 120A at the authentication sever 120, the time at which one or more elements of the spoken audio are spoken is determined, with reference to the initiation time. For example, the ASR may be performed in real time as the audio is received. As the ASR algorithm determines an element of the text from the audio, a timestamp is generated that corresponds to the time point at which that element is received at the authentication server 120. Alternatively, the ASR may be performed once all the audio is captured. The start point of the audio capture is timestamped at the authentication server 120, so that this time is known relative to the initiation time. The time point of an element within the recording is then determined with reference to the start point of the audio capture, and therefore the time of the element can be determined relative to the initiation time. The time difference between the initiation time and the time at which the start of the first element of the unique string is detected in the voice recording data is therefore determined. An element of the spoken audio may be a spoken digit, a word in a natural language phrase or a syllable of a natural language phase. Different digits and words may have different numbers of syllables and thus take longer to speak. In one example, the ASR algorithm provides a start and stop time for each element. In some examples, the ASR algorithm provides a start and stop time for each syllable. For example, the ASR algorithm may generate a number of time points for each spoken element, including a time point corresponding to the start point of the section of audio corresponding to the spoken element. The time difference between the initiation time and the time at which the start of the first element of the unique string is detected in the voice recording data is determined. This is then compared to a stored reference time difference - a predetermined threshold. The reference timing information therefore comprises a predetermined threshold, and the user is not authenticated if the time difference between the initiation time and the start of the first element of the unique string is longer than the predetermined threshold. If the timing comparison module 120E determines that the time difference between the initiation time and the start of the first element of the unique string is longer than the predetermined threshold, the timing comparison module 120E outputs information indicating that the authentication should fail. If the timing comparison module 120E determines that the time difference between the initiation time and the start of the first element of the unique string is not longer than the predetermined threshold, the timing comparison module 120E outputs information indicating that this check has been successful.

The audio is therefore received at the authentication server 120 in real time, and the authentication server 120 measures the latency from when the unique string was provided to the user. The authentication method imposes a limit on the time between the initiation time and the speaking of the first element of the unique string. In order for an attacker to spoof the system, that attacker would need to synthesise a voice recording so that the unique phrase could be started to play within this time limit. Any synthetic file that takes longer than the predetermined threshold to start to play would not meet this timing requirement of the authentication method. Speech synthesis methods require a finite amount of time to generate synthetic audio sufficiently accurately to fool biometric analysis methods. The authentication method uses this trait to detect such an attack, imposing a significant burden on any attacker. As such, spoofing of the system can be mitigated, since generating a synthetic audio file quickly enough may be computationally unachievable for an attacker. The authentication method uses the difference in time required for a machine and a human to respond to the unique string information, using the assumption that the machine will require more time to generate the audio, while the human can just utter a word instantly. The difference between the start of the speech and the time at which the user is provided with the string is therefore used to detect a synthesis based attack.

The predetermined threshold is a time period chosen to be sufficiently long to allow a user to read the displayed unique string and begin speaking, but too short for a synthetic voice algorithm to generate a synthetic voice recording sufficiently accurate to fool biometric analysis methods. For example, the predetermined threshold may be 2 seconds. The pre-determined threshold may be 1 second. In one example, the pre-determined threshold may be calculated by generating a spoken version of the unique string using a text to speech synthesis system, and determining the delay between providing the text and receiving the speech. For example, the time period corresponding to the delay may be reduced by some fixed fraction and used as the pre-determined threshold. For example, a text to speech synthesis system may be used to test the system, with the pre-determined threshold being tuned based on the results. In one example, the predetermined threshold may be increased by an amount corresponding to a determined or estimated network latency between the user device 110 and the authentication server 120. For example, the network latency at the lower network layers may be measured via ping/pongs or by measuring response times.

In a second example, comparing the timing information additionally or alternatively includes determining, from the voice recording data, the length of time taken for the user to speak the extracted text. As described above, as the ASR algorithm determines each element of spoken text, a timestamp is generated that corresponds to the time point in the voice recording data at which that element is spoken by the user. The length of time taken for the user to speak the extracted text may thus be determined as difference between the start time at which first element was spoken and the end time at which the last element was spoken, as indicated by the time stamps. The reference timing information comprises a predetermined length of time. The authentication further comprises comparing the extracted length of time to the predetermined length of time, wherein if the extracted length of time is longer than the predetermined length of time, the user is not authenticated. By restricting the time in which audio can be captured for authentication purposes, the authentication method provides a further time constraint on any attacker seeking to synthesize audio for spoofing the system. This additional time constraint provides a significant burden on the attacker, rendering voice synthesis attacks difficult if not impossible. In particular, it will take the machine some measurable amount of time, distinguishable from network latency and natural variations, to render the synthetic speech as a waveform so that the attacker is able to inject it into the audio stream - this means that the whole utterance takes longer than the reference pre-determined length of time to be spoken in total. In one example, the predetermined length of time is calculated as an estimated time taken to read out loud the unique string. The estimated time may be calculated using a statistical model that determines the estimated time from timing information of reference input voice data - for example, a mean and standard deviation may be determined, or Gaussian models may be used. The reference input voice data used to determine the estimated time may include a plurality of samples of voices reading aloud strings of the same length and format as the unique string provided in the authentication method. ASR may be applied to each voice sample and timestamps extracted for each voice sample. A statistical model may be applied to the time stamps extracted from the voice samples to determine an estimated length of spoken audio from the voice samples. For example, the estimated length of time may be taken as the mean of the length of audio present in a number of the voice samples. If the timing comparison module 120E determines that the extracted length of time is longer than the predetermined length of time, the timing comparison module 120E outputs information indicating that the authentication should fail. If the timing comparison module 120E determines that the extracted length of time is not longer than the predetermined length of time, the timing comparison module 120E outputs information indicating that this check has been successful.

In a third example, comparing the timing information further comprises identifying a time difference pattern between a plurality of spoken elements detected in the voice recording data. The time difference pattern may be identified by performing ASR on the voice recording data, identifying time stamp information for each element, and identifying the time separation between each element of the plurality of spoken elements. In this example, the reference timing information comprises a predetermined time difference pattern. The user is not authenticated if the time difference pattern is different to the predetermined time difference pattern. The predetermined time difference pattern represents an expected time separation of each spoken element of the unique string. The predetermined time difference may be calculated using a statistical model that determines the estimated time from timing information of reference input voice data. The reference input voice data may include a plurality of samples of voices reading aloud strings of the same length and format as the unique string provided in the authentication method. ASR may be applied to each voice sample and timestamps extracted for each voice sample. The statistical model may be applied to the time stamps extracted from the voice samples to determine a reference time separation of each element in the spoken audio in the voice samples. Various statistical models may be used, for example heuristic models or statistical models such as Gaussian models, where a log score can be computed and accumulated per word for the entire phrase. If the timing comparison module 120E determines that the extracted time difference pattern is different to the predetermined time difference pattern, the timing comparison module 120E outputs information indicating that the authentication should fail. If the timing comparison module 120E determines that the extracted time difference pattern is to the same as the predetermined time difference pattern, the timing comparison module 120E outputs information indicating that this check has been successful.

If any of the above described checks performed by the ASR module 120A, voice biometrics module 120B, replay detection module 120C, synthesis detection module 120D, and timing comparison module 120E indicate that the authentication should fail, the authentication server 120 outputs a message indicating that the authentication has failed. If all of the checks performed by the ASR module 120A, voice biometrics module 120B, replay detection module 120C, synthesis detection module 120D, and timing comparison module 120E are successful, the authentication server 120 outputs a message indicating that the authentication has been successful.

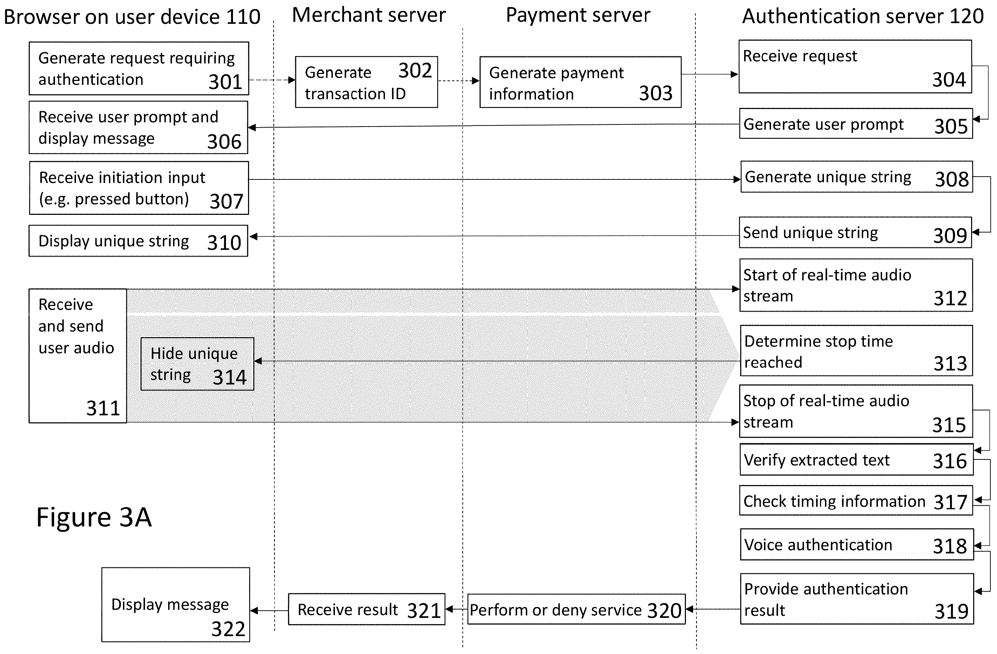

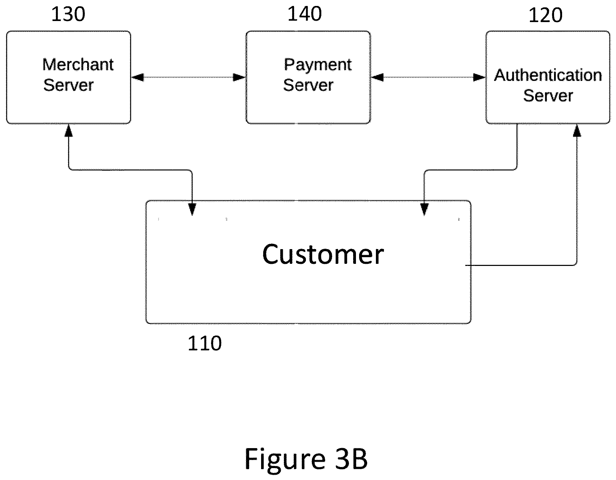

An example of an authentication method is illustrated in Figure 3A. Figure 3A shows steps performed by a user device 110 and an authentication server 120. The user device 110 and authentication server 120 may be a user device 110 and authentication server 120 such as described in relation to Figure 1 above. In this example, the user interfaces with the authentication server 120 through a browser running on the user device 110 and accessing a web-based portal. Figure 3B shows an example system comprising an authentication sever 120, a payment server 140, a merchant server 130 and a customer device 110 which may be used to implement the method of Figure 3A. In the method of Figure 3A, a user is authenticated prior to making an online purchase with a merchant. In this example, the user device is a computing device, such as a smart phone or a computer for example, which transmits and receives signals to and from an authentication server 120 and a merchant server 130 via a communication network such as the Internet. The merchant server 130 and the authentication server 120 also transmit and receive signals to and from a payment server 140 via a communication network such as the Internet.

Prior to performance of the method described in relation to Figure 3A, the user registers with the authentication server 120. During the registration process, the authentication server 120 requests the user to speak one or more phrases. The user may speak the same phrase three or four times. The phrases may be strings of the same length and format as the unique string which will be provided in the authentication method - for example a 16 digit sequence of numbers. These audio signals are transmitted to the authentication server 120 from a user device, which may be the same device 110 as used in the method of Figure 3A or a different device. The audio signals may be transmitted through a web-browser or app, by calling a specified telephone number or by sending a voice message to a specified telephone number. These audio signals are then stored at the authentication server 120 together with a user identifier. The authentication server 120 generates a voice template based on the received set of audio signals, and stores the voice template together with the user identifier.

In the following method shown in Figure 3A, a user is authenticated prior to performing an online transaction.

At step 301, the user device 110 generates a request requiring authentication of the user. In this example, the request is a request for an online payment transaction. The request may alternatively be a request to access an online account for example. In this example, the user uses the user device 110 to request the online payment transaction through a web-based portal. The user accesses the portal in a web browser running on the user device 110. The user also inputs information identifying the registered user - for example payment details - through the web-based portal.

In this example, the request is routed to one or more third parties before being forwarded to the authentication server 120. In particular, in this example, the one or more third parties includes a merchant server 130 with which the user device 110 is seeking to complete the transaction, and a payment server 140 that processes payment between the user and the merchant. In an alternative example, the request may be transmitted directly to the authentication server 120 where it is received at step 304.

The merchant server 130 generates a transaction ID at step 302 that is forwarded on to the payment server 140. The request includes information identifying the registered user - for example the payment details. The request also includes a transaction ID, which is a sequence of numbers.

The payment server 140 generates payment information at step 303 used to process the payment. The payment information is then forwarded with the transaction ID to the authentication server 120 in a request. The request comprises information identifying the registered user. This may be the payment information, or separate information - for example a username, name or alphanumeric code identifying a registered person. The information identifying the registered user is then used by the authentication server 120 to identify a stored voice template corresponding to the specified user. The following authentication method is then performed in order to determine whether the user corresponds to the specified user identity.

In response to receiving the request in 304, the authentication server 120 generates a user prompt at step 305 for sending to the user device 110. At step 306 the user device 110 receives the user prompt and, in response, displays a message to invite the user to begin authentication. For example, by providing the user prompt to the user device 110, the authentication server 120 instructs the user device to present an interface to initiate authentication. For example, in response to the user prompt, the user device 110 displays the interface as described above in connection with Figure 2A.

At step 307 the user device 110 receives initiation input from the user to begin the authentication process. For example, the user interacts with the interface presented in response to receiving the user prompt, such as by pressing the button 210. In response to the initiation input being received, the user device 110 transmits initiation information to the authentication server 120 to inform the authentication server 120 that the initiation input has been received. In this example, the initiation time is not logged at the authentication server 120 until the unique code is sent to the user device 110, however in alternative examples, the initiation time may be logged as the time at which this initiation input is received.

In response to receiving the initiation input from the user, the user device 110 may also establish a communication channel between the user device 110 and the authentication server 120. The communication channel may be used for all subsequent communications and data transmissions between the user device 110 and the authentication server 120 during the authentication process.

In response to the initiation information being received, the authentication server 120 may generate the unique string at step 308. Alternatively, the unique string may be generated earlier in the process. For example, generating the unique string may take place at the same time as generating the user prompt at step 305, or earlier than the generation of the user prompt. For example, the unique string may be generated immediately upon receiving the request at step 304. However, generating the unique string only upon receipt of the initiation input improves security, since there is minimized time during which the unique string is generated, stored and thus susceptible to acquisition from an attacker.

The unique string is a one time string, generated specifically for the transaction. Various methods of generating the unique string may be used. For example, the unique string may be randomly generated - for example, a sequence of digits may be generated by a random number generator, or a random natural language phrase may be seeded by a random number generator. In one example, the unique string comprises a random sequence of digits or a random natural language phrase. Since there are only ten available digits (0 - 9), an attacker may seek to prepare for a spoofing attack by synthesizing voice data for each available digit and then constructing a string together later once the pattern of digits is known. By contrast, there can be hundreds of thousands of words available for construction into a natural language phrase. It is therefore harder for an attacker to prepare for a spoofing attack, since the attacker would be required to synthesize and store hundreds of thousands of voice data clips for later assembly. Any natural language database may be used to generate the natural language phrase. The database may be stored at the authentication server 120 or remotely accessed by the authentication server 120.

Alternatively, the unique string may be generated using an algorithm that generates a number from two or more numeric inputs. The algorithm may comprise a one-way function. The algorithm takes two or more numeric inputs, wherein at least one of the inputs comprises information relating to a transaction for which authentication is being performed. For example, the payment information and the transaction ID may be taken as input. The one-way function may be a hash function. Hashed data is one-way linked to the data used as input. The authentication server 120 may store the input data and reconstruct the value that the user was asked to speak at a later point, using the input data and the algorithm. The user would only have the hashed values, and no way to construct the original data used as input. This would enable the authentication server 120 to prove the link between the original transaction data and the hashed-number spoken by the user with high probability. This enables proof of transaction and non-repudiation. Non-repudiation provides assurance that the sender of information is provided with proof of delivery and the recipient is provided with proof of the sender's identity, so neither can later deny having processed the information. In this case, the authentication server is provided with proof of the user's identity, so that the user cannot later deny having provided the transaction information.

In one example, one or more unique elements of the transaction or request for which the authentication is being performed are aggregated to create a string. A one-way hash is performed on the string. The string is then simplified to create a unique numeric value of variable length, which is then presented to the user. Using a hash function provides an output that is indistinguishable from random. Furthermore, the output is one-way linked to the data used as input. The authentication server 120 may therefore store the original data and reconstruct the value the user was asked to speak at a later time. This allows the authentication server 120 to prove the link between the original transaction data and the number spoken by the user with high probability. One or more elements of the transaction being performed when spoken by the genuine user may therefore provide an audit trail that puts the genuine user at the centre of the transaction, to non-repudiation levels. This is helpful where a genuine user subsequently disputes the transaction for example.

In one example algorithm, the two or more input bit strings are concatenated and the result run through a one-way cryptographic hash algorithm, such that the block length of said hash is strictly greater than the number of bits of the concatenated string and N (the number of digits of the unique string) is less than log₁₀2^{k} , where k is the bit length of the resultant hash. The resulting hash value is converted from binary to base-10 and the first N digits taken as the unique string, making it human readable. For example, the authentication server 120 may use a hashing algorithm that takes input numeric data comprising the transaction **ID** generated at 302, the payment information generated at 303, and a time-limited one-time passcode (TOTP) generated at the authentication server 120 to generate a unique numeric phrase (a sequence of numbers). The phrase is derived from a cryptographically secure hashing algorithm. For example, a function takes the 3 separate numeric values (inputs), and performs a cryptographic hash function on the concatenated input string, that outputs a string of bits. SHA-256 is an example of a cryptographic hash function that outputs a value that is 256 bits long. The 256 bit hash output is then printed as base-10 and the first: N digits taken as the unique string. Example pseudocode defining an example algorithm is provided below:

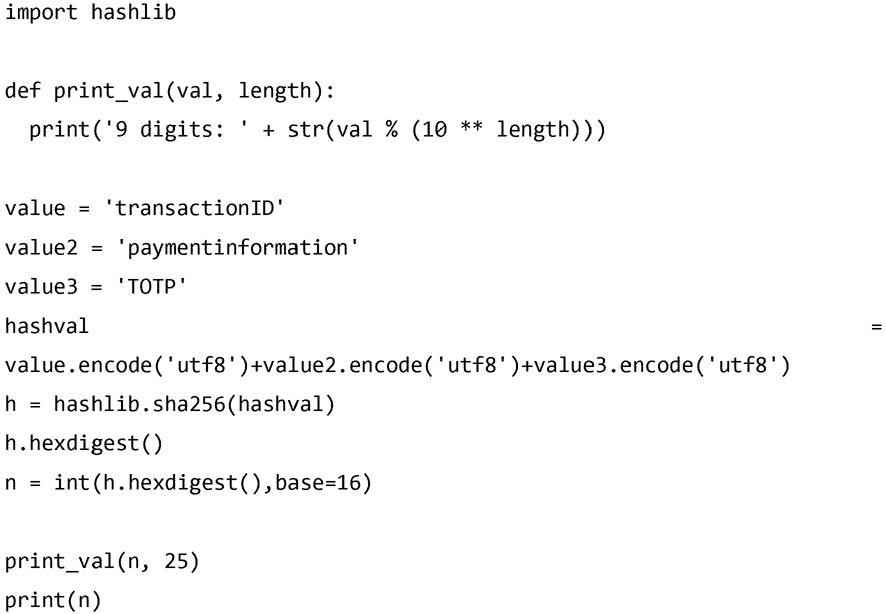

Also in response to receiving the initiation information from the user device 110, the authentication server 120 sends the unique string to the user device 110 for display on the user device 110, at step 309. Step 309 is independent of whether the unique string is generated before or in response to the initiation information being received from the user device. The initiation time is logged at the authentication server 120 as the time at which the unique string is sent to the user device 110.

In response to the unique string being sent to the user device 110 in step 309, the user device 110 displays the unique string at step 310. The string may be provided to the user through the web-based portal, for example the string may be displayed on-screen. The user is then able to read aloud the displayed unique string. In response to the initiation input being received from the user at step 307, the user device 110 begins recording of audio at step 311 and captures voice recording data. The user device 110 may initiate the beginning of audio capture itself, or the user device may initiate the beginning of audio capture in response to an instruction from the authentication server 120. The instruction may be sent by the authentication server 120 in response to receiving the initiation information at the authentication server 120.

In one example, the user device 110 begins an audio stream to transmit the captured audio to the authentication server 120 in real-time. The authentication server 120 receives the start of the real-time audio stream at step 312 and may generate a time stamp at this point. The user speaks the requested text sequence, and this is captured by the user device 110 as an audio signal and streamed to the authentication server 120. The audio signal is sent from the user device 110 to the authentication server 120 through the web-browser in this example.

In one example, the user device 110 only displays the unique phrase and enables recording of audio while the user is pressing the button 210 on the interface of the user device. If the user releases the button, then the display of the unique phrase stops and the audio recording stops. The requirement that the button must be held provides additional security advantages, since it requires the interaction of a user during the authentication process.

In another example, the unique string is additionally or alternatively only displayed on the user device 110 for a specified period after the initiation time - this is referred to as the stop time. Once the authentication server 120 has determined that a stop time has been reached, the authentication server 120 sends an instruction to the user device 110 to stop displaying the unique string at step 314. The stop time may be a predetermined amount of time after the initiation time. For example, it may be a predetermined amount of time after sending the unique string at step 309. The predetermined amount of time may be calculated as an estimate for the amount of time required for a user to read aloud the unique string. By displaying the unique string for only a limited amount of time, potential attackers are provided with limited time in which to synthesize synthetic voice data.

The authentication server 120 may additionally or alternatively instruct the user device 110 to stop the capture of audio after the predetermined amount of time, or stop receiving the audio capture after the predetermined amount of time. This prevents an attacker from completing the phrase if the speech synthesis has caused a delay for example, which will be detected when the extracted text is compared with the unique string.

As has been described previously, in some examples, the authentication server 120 performs a determination to confirm that the audio is received as a continuous audio stream, throughout the period during which the audio stream is received.

At step 315 the authentication server 120 determines that the real-time audio stream has stopped. The stop may be following a user releasing the button 210, or may be as a result of an instruction from the authentication server 120 to stop the capture of audio as described above.

At steps 316, 317 and 318 the authentication server 120 performs authentication on the voice recording data.

In step 316, the authentication server 120 compares text extracted from the voice recording data with the unique string generated earlier in the method. The text is extracted by performing ASR techniques on the voice recording data. The ASR may be performed after receipt of the voice recording data (e.g. immediately prior to step 316). Alternatively, ASR may be performed in real-time during the receipt of the audio stream between steps 312 and 315.

At step 317, the authentication server 120 checks timing information, as has been previously described. In this step, timing information corresponding to the received audio signal is compared to reference timing information. For example a time difference between the initiation time and a time at which the first spoken element is detected in the received voice recording data is determined and compared with a pre-determined threshold.

Additionally or alternatively, the length of time taken for the user to speak the extracted text is compared to a pre-determined length of time.

At step 318, the authentication server 120 performs voice authentication. For example, the authentication server 120 performs one or more of biometric analysis, synthesis detection and replay detection of the voice recording data, using the techniques and modules previously described. As part of the voice authentication process 318, the authentication server 120 uses the information identifying the registered user received in 304 to retrieve a stored voice print from a stored user profile. The voice authentication may alternatively be performed before step 317 and/or before step 316. As a further alternative, the voice authentication may be performed in real-time during the receipt of the audio stream between steps 312 and 315.

At step 319 an authentication result is provided. If all of steps 316, 317 and 318 result in a successful authentication, then a positive result is provided. If one or more of steps 316, 317 and 318 result in a failed authentication, then a negative result is provided.

The authentication result is provided to the payment server 140. Dependent on whether the request has been authenticated or not, the payment server 140 will perform or deny the service at step 320. For example, when the request is a payment transaction request, the payment server will carry out or not carry out the transaction. Following step 320, the payment server will communicate the result to the merchant server 130, which at step 321 receives the result of the authentication and whether not the service has been performed or denied. The merchant server then communicates a message to the user device 110 at step 322 informing them whether the transaction has been performed.

In alternative examples, a message is provided directly to the user device 110 to inform the user of the authentication result.

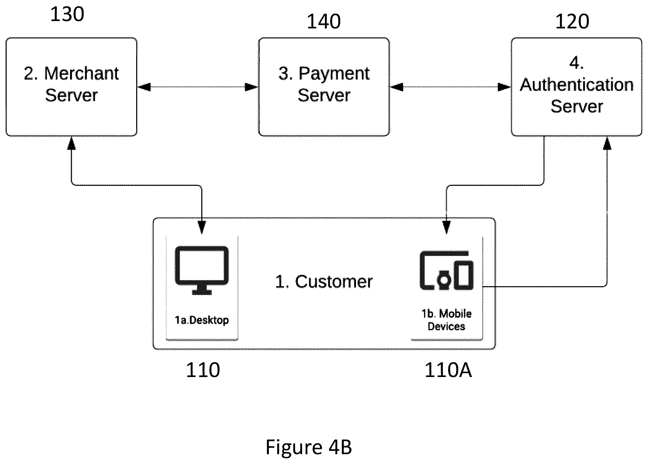

An authentication method according to another embodiment is illustrated in Figure 4A. Figure 4A shows the communications and steps performed between a registered user device 110A, a user device 110 and an authentication server 120. The user device 110, registered user device 110A and authentication server 120 may be a user device 110, registered user device 110A and authentication server 120 such as described in relation to Figure 1 above. Figure 4B shows an example system comprising an authentication sever 120, a payment server 140, a merchant server 130, customer module device 110A and a customer device 110 which may be used to implement the method of Figure 4A. Figure 4B shows an system architecture containing multiple backend servers of the involved parties as well as the user web browser and mobile device.

The authentication method of Figure 4A is substantially similar to Figure 3A, but instead of the user interacting with the authentication server 120 solely via a browser running on a user device 110, the user further communicates with the authentication server 120 via a registered user device 110A that is separate to the device executing the browser.

Prior to performance of the method described in relation to Figure 4A, the user registers with the authentication server 120. During the registration process, the user registers their mobile device 110A with the authentication server 120. For example, the user installs dedicated software such as an app on the mobile device 110 and communicates with the authentication server 120 through the app to register the mobile device 110. During the registration process, the authentication server 120 also requests the user to speak one or more phrases as described previously. The audio signals are transmitted through the app and used to generate a voice template. The authentication server 120 stores information identifying the registered user device 110A and the voice template together with the user identifier.

Steps 401 - 404 and 416 - 422 of Figure 4A are performed in the same manner as steps 301 - 304 and 316 - 322 of Figure 3A, respectively. As such, detail regarding these steps is not repeated here.

Steps 405 - 415 of Figure 4A are performed in the same manner as described above for steps 305 - 315 of Figure 3A, respectively, with the exception that instead of communications being between the authentication server 120 and the user device 110 running the browser, communications are between the authentication server 120 and the registered user device 110A. In particular, the user prompt generated at 405 is sent to the registered user device 110A associated with the identified user through the app running on the registered user device 110A at step 406. The user interface is then displayed on the registered user device 110A through the app. The initiation input from the user is received at the registered user device 110A at step 407 and the initiation information sent from the registered user device 110A to the authentication server 120. In response to receiving the initiation input, the registered user device 110A may establish a communication channel between the registered user device 110A and the authentication server 120. The communication channel may be used for all subsequent communications and data transmissions between the registered user device 110A and the authentication server 120 during the authentication process.

The authentication server 120 generates the unique string in 408 as described previously, and this is sent to the registered user device 110A through the app running on the registered user device 110A. For example, the string may be sent via a push notification. The unique string at 409 is transmitted to the registered user device 110A, which will display the received unique string at step 410 through the app.

At step 411 the registered user device 110A receives and sends voice recording data in a real-time audio stream through the app, and the authentication server 120 receives the start of the real-time audio stream at step 412. When the authentication server 120 determines that a stop time is reached at 413, the instruction to hide the unique string is sent to the registered user device 110A through the app, which stops display of the unique string at 414. At step 415 the authentication server 120 determines that the real-time audio stream received from the registered user device 110A has stopped.

Steps 406 - 415 of Figure 4A relate to the communications between the registered user device 110A and the authentication server 120 to provide voice data upon which authentication is performed. By providing these communications between a registered user device 110A separate from the computer device 110 that initiates a request, further security is provided in the form of a possession security factor. Namely, an attacker would need to have physical possession of the user device that has been registered with the authentication server 120.

By providing the authentication steps 316 - 318 of Figure 3A or the authentication steps 416 - 418 of Figure 4A at the authentication server 120, the authentication process is performed remote from the user device. When biometric solutions are embedded into the same end user device that makes the request or serves as the second possession factor, these may be tampered with by a malicious actor. It is therefore preferable to trust a biometric service that is server based and cannot be tampered with, or at least is under the control of the payment provider or an external party for example, unlike the user devices. A server-based authentication method is more resistant to tampering from an attacker, even if that attacker were to take possession of the user device 110 and/or the registered user device 110A.

In the above described methods, a unique string is sent and displayed to the user in a single step. A sophisticated attacker may attempt to overcome the authentication method by hacking the authenticator app running on the user device 110A, and providing a programmatic hook into the app. Once the attacker software receives the unique string, it immediately provides it to TTS software to generate a waveform. Once the waveform is available, or even first parts of it, the attacker software starts streaming it back to the authentication server 120. In this case, all manual user interaction would be bypassed by the attacker. However, latency will still arise in the time it takes the TTS algorithm to generate the phrase.

In an alternative example, the unique string is sent and displayed to the user in multiple steps. For example, the unique string is sent and displayed one element at a time, e.g. one word at a time or one digit at a time. In this manner, a delay may be incurred by an attacker for each displayed part of the string, which then accumulate to a relatively larger delay over the entire audio signal. The received audio signal may also be analysed for other factors such as whether the intonation is natural. For example, each element of the unique string is sent at a specified time, where the times are measured. For example, instead of sending 1234 5678 from the authentication server 120 to the user device at time t1, the first digit 1 is sent at t1 and displayed, the second digit 2 is sent at t2 and displayed, the third digit 3 is sent at time t3 and displayed, and so on. For example, the code may be displayed in the following manner at t1: 1*** **** in the following manner at t2: *2** ****, in the following manner at t3: **3* ****, and so on. When creating words in isolation, synthetic algorithms often result in unnatural sounding speech as a whole, due to wrong intonation or pitch for example. This may also be detected in the voice authentication.

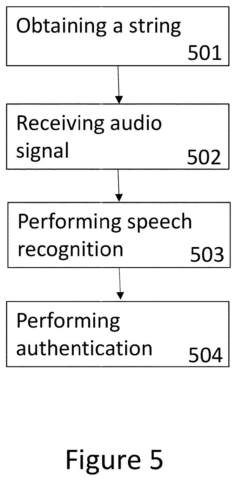

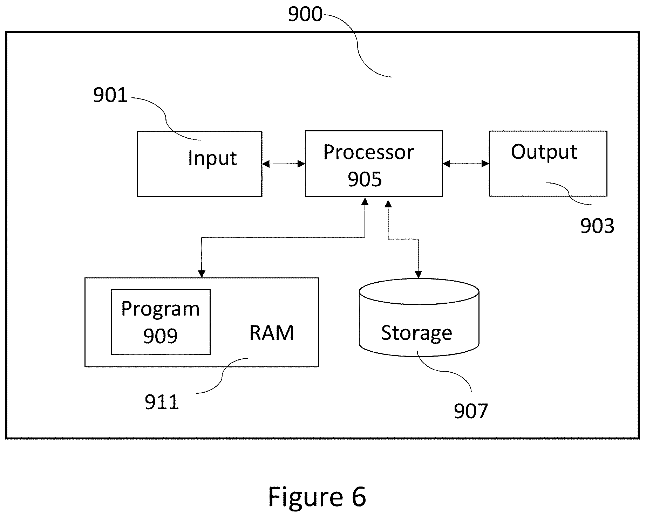

Figure 5 is a flow chart illustrating an authentication method according to an embodiment. The authentication method may be performed on an authentication system such as described in relation to Figure 6 for example. The method uses a plurality of stored templates, also referred to as voice prints, corresponding to registered persons.

In step 501, a string is obtained. The string may be generated at the authentication system, or received from a separate device. The string is a unique or one time string, obtained specifically for use in the method.

In step 502, an audio signal is received. The authentication method is performed in order to determine whether the audio signal corresponds to a specified identity. In this step, voice recording data is received from a user device.

In step 503, automatic speech recognition is performed on the voice recording data to extract text.

In step 504, authentication of the user is performed. The authentication comprises comparing the extracted text and the string.

The authentication further comprises performing voice authentication of the user based on the voice recording data. The voice authentication uses an algorithm that generates a digital representation of the distortion of sound caused by the speaker's physiology from an audio signal. This representation comprises a series of values, representing voice information. The values may be represented as float values, which are stored in a vector, referred to here as a voice information vector. The voice information comprises information specifying various characteristics of the user voice, such as pitch, cadence, tone, pronunciation, emphasis, speed of speech, and accent. The unique vocal tract and behaviour of each person results in distinct voice information that allows verification of the person using the stored template. The stored template is a vector comprising a set of values which were previously extracted from speech received from the registered user. The voice recording data is taken as input to the algorithm. The voice information generated from the voice recording data is then compared to the stored voice information corresponding to the identified user to generate a voice biometric score.

Optionally, the authentication may further comprise comparing timing information corresponding to the voice recording data to reference timing information, wherein the user is not authenticated if the timing information does not satisfy the reference timing information.

The process used to interact with the user to capture the biometric attributes of the voice mitigates against even the most advanced speech synthesis algorithms being used to attack the system. The process comprises generation of a unique authentication phrase for every single transaction. Playback attacks, containing previously recorded phrases of the genuine user, are thus mitigated due to the fact that a unique phrase is required to be spoken. Furthermore, under the time constraints imposed, it is difficult to assemble the audio even if the individual words would be available as a recording.

The manner in which the phrase is presented to the user may also be used to make it hard to attack the system using spoofing attacks - either playback or synthetic attacks. For example, the phrase is presented only in response to a manual interaction with the device by the user. Furthermore, the phrase may be presented to the user by a web browser or mobile application in a way that it is only visible to the user for a very limited amount of time, for example exactly the amount of time it requires to speak this phrase. In some examples, the user interface of the application contains a press-and-hold button, or a press-to-speak button, that starts the recording and streaming of the captured audio to the authentication server. At the same time it displays the random phrase on the user interface and asks the customer to speak the phrase - this is referred to as a "See-and-Say" method. Once the button is released, the phrase will hide again and streaming of audio to the authentication server stops.

The authentication server validates that the biometric traits extracted from the audio matches the biometric voiceprint of the customer stored on the server. This provides a first authentication factor, based on biometric authentication. In some examples, the authentication server also validates that the spoken phrase exactly contains the words of the generated unique random phrase that was previously sent to the users registered device via a push notification. This provides a second authentication factor, based on possession. These validations combined provide a highly secure two factor authentication process.

The authentication server further validates that the first word of the phrase started immediately after the audio stream was started. For example, the authentication server measures the delay from presentation of the unique phrase until the start of uttering it. For example, the authentication server determines the length of time between an initiation time and the start of the first word of the phase, and compares this to a reference. The initiation time may be the time that an initiation input is received from the user device, the time that the unique phrase is sent to the user device or the start time that the audio stream is received (in step 312 for example). The reference time is set according to which point is taken as the initiation time. The authentication server further validates that the time the stream is active in total compared to a reference time. These checks provide protection against spoofing attacks, specifically of synthetic nature.

Synthetic attacks, where a generic speech model of the customer has been created, are also mitigated due how the phrase is presented and the time constraints of the system. For example, an attacker may type the displayed phrase into a speech synthesis system service and have the speech synthesized and played back. Even the best quality TTS requires multiple seconds to render the speech phrase. In the meantime the authentication attempt will time out - for example a stop time is reached and audio capture is stopped.

A process for secure and convenient authentication of transactions using voice biometrics that is highly resistant against spoofing attacks, specifically synthetic ones is provided. The quality of synthetic speech algorithms has improved dramatically over recent years, making it possible to create high-quality synthetic speech models of a speaker with very little speech. This imposes a threat for the use of biometrics, for those for whom speech data is publicly available or an impostor has gathered recordings. The above described process and user interface design provide that the secret phrase to repeat is unveiled to the user only for a very limited amount of time, approximately the time it requires to naturally speak the utterance. An impostor would have to type the phrase into a speech generator, have it rendered and played back within these time limits, while pressing and holding or activating the recording button. For example, systems for speech may be accessible as web services, and the quality continues to improve. However, they still require some amount of time to render the audio. This makes the delay of receiving the actual speech at the authentication server unnaturally high, which can be detected and the authentication rejected.

The process may be used for multi- and single-factor-authentication, in a web browser or on a mobile app on a device. When used on a mobile device, the device itself may serve as a second possession factor, adding additional security.

Optionally, the system is further protected by playback and synthetic speech detection algorithms which algorithmically detected artifacts in the audio which are typical for audio played back over a loudspeaker or audio synthetically generated.

Figure 6 is a schematic illustration of an authentication system 900 in accordance with an embodiment. The authentication system 900 comprises an input 901, a processor 905, working memory comprising RAM 911, an output 903, and non-volatile storage 907.

In this example, the authentication system 900 is a server device. The authentication system 900 receives an input audio signal originating from a user device. The input audio signal includes the voice recording data as previously described. As described in relation to Figures 3A and 4A above, the audio signal may be received at the authentication system 900 via one or more third party systems. The user device comprises a microphone (not shown) which generates an audio signal. The audio signal is transmitted to the authentication system 900 from the user device through a communication network. The user device may be a smart device, which transmits the audio signal via the Internet.

The audio signal is received at the input 901 of the authentication system 900. The input 901 is a receiver for receiving data from a communication network, such as the Internet.

The processor 905 accesses the input module 901. The processor 905 is coupled to the storage 907 and also accesses the working memory 911. The processor 905 may comprise logic circuitry that responds to and processes the instructions in code stored in the working memory 911. In particular, when executed, a program 909 is represented as a software product stored in the working memory 911. Execution of the program 909 by the processor 905 causes embodiments as described herein to be implemented. In this way, implementations of the embodiments described herein can be realized using one or more modules of computer program instructions.

The processor 905 is also configured to communicate with the non-volatile storage 907. As illustrated, the storage 907 is local memory that is contained in the authentication system 900. Alternatively however, the storage 907 may be wholly or partly located remotely from the authentication system 900, for example, using cloud based memory that can be accessed remotely via a communication network such as the Internet. The program 909 is stored in the storage 907. The program 909 is placed in working memory when executed, as illustrated in Figure 6.

The processor 905 also accesses the output module 903. The output module 903 provides a response generated by the processor 905 to a communication network such as the Internet. As described in relation to Figures 3A and 4A above, a response generated by the processor 905 may be provided to one or more third party systems, for example. The input and output modules 901, 903 may be a single component or may be divided into a separate input interface 901 and a separate output interface 903.

As illustrated, the system 900 comprises a single processor. However, the program 909 may be executed across multiple processing components, which may be located remotely, for example, using cloud based processing. For example, the authentication system 900 may comprise at least one graphical processing unit (GPU) and a general central processing unit (CPU), where various operations described in relation to the methods above are implemented by the GPU, and other operations are implemented by the CPU.

Usual procedures for the loading of software into memory and the storage of data in the storage unit 907 apply. In particular, the program 909 can be embedded in original equipment, or can be provided, as a whole or in part, after manufacture. For instance, the program 909 can be introduced, as a whole, as a computer program product, which may be in the form of a download, or can be introduced via a computer program storage medium, such as an optical disk. Alternatively, modifications to existing software can be made by an update, or plug-in, to provide features of the described embodiments.

In the above described example, the authentication system 900 comprises a server device which receives an audio signal originating from a user device. However, alternatively, the authentication system 900 may be an end-user computer device, such as a laptop, tablet, smartwatch, or smartphone. In some examples, the program 909 is executed on the same device which records the sound. In such an authentication system 900, the input module 901 comprises a microphone. In such systems, the initiation time may be taken as the time at which the unique phrase is displayed on the device for example. The output module 903 provides the response generated by the processor 905 to an output such as a speaker or a screen. The output may comprise an audible message that is played on a speaker, or a message that is displayed to the user on a screen. It will also be appreciated that in some the examples, parts of the program 909 may be executed on a user device whilst other parts of the program may be executed on a server device, with data being transmitted between the two devices.

While it will be appreciated that the embodiments described herein could be implemented using any computing system, the example authentication system 900 illustrated in Figure 6 provides means capable of putting an embodiment, as described herein, into effect. In use, the authentication system 900 receives, by way of input 901, an audio file. The program 909, executed on processor 905, performs an authentication method and provides an output in the manner described with reference to the above figures. The authentication method comprises performing a voice biometric based authentication. Voice biometric engines can distinguish between a legitimate person, being the person who owns the claimed identity and whose voice was enrolled against that identity, and an imposter. The system 900 outputs data by way of the output 903.

While certain embodiments have been described, these embodiments have been presented by way of example only and are not intended to limit the scope of the invention. Indeed, the novel methods, devices and systems described herein may be embodied in a variety of forms; furthermore, various omissions, substitutions and changes in the form of the methods and systems described herein may be made without departing from the scope of the invention as claimed.

## Claims

1. A computer implemented authentication method, comprising:
obtaining (501) a string;
receiving (502) an audio signal;
performing speech recognition (503) on the audio signal to extract text; and
performing authentication (504) of a user, the authentication comprising:
comparing the extracted text and the string; and
performing voice authentication of the user based on the audio signal;
**characterized in that**
the authentication further comprises comparing (317) timing information of the audio signal to reference timing information, wherein the user is not authenticated if the timing information does not satisfy the reference timing information.

2. The method of claim 1, further comprising:
receiving (307) initiation information, wherein comparing the timing information comprises identifying a time difference between an initiation time and a time at which the first spoken element is detected in the audio signal, wherein the reference timing information comprises a predetermined threshold and the user is not authenticated if the time difference is longer than the predetermined threshold.

3. The method of claim 2, further comprising sending (309) the unique string to a user device, wherein the initiation time is the time at which the unique string is sent, wherein, optionally, the audio signal is received as a real-time audio stream from the user device.

4. The method of any preceding claim, further comprising:
determining, from the audio signal, the length of time taken for the user to speak the extracted text, wherein the reference timing information comprises a predetermined length of time, and wherein the authentication further comprises comparing the determined length of time to the predetermined length of time, wherein if the determined length of time is longer than the predetermined length of time, the user is not authenticated, wherein, optionally, the predetermined length of time is calculated as an estimated time taken to read out loud the string.

5. The method of any preceding claim, wherein comparing the timing information comprises identifying a time difference pattern between a plurality of spoken elements detected in the audio signal, wherein the reference timing information comprises a predetermined time difference pattern; and wherein the user is not authenticated if the time difference pattern is different to the predetermined time difference pattern.

6. The method of any preceding claim, wherein the method further comprises:
instructing the user device to present an interface to initiate authentication, wherein the user device is instructed to present the interface following receipt of a transaction request.

7. The method of any preceding claim, further comprising sending the string to the user device for display on the user device in response to receiving initiation information from the user device; and, optionally, further comprising sending an instruction to the user device to stop displaying the string.

8. The method of any preceding claim, further comprising generating (308) the unique string using an algorithm comprising a one-way function, wherein the algorithm takes two or more numeric inputs, wherein at least one of the inputs comprises information relating to a transaction for which authentication is being performed.

9. The method of any of claims 1 to 7, wherein the string comprises a random sequence of digits or a random natural language phrase.

10. The method of any preceding claim, further comprising performing a determination as to whether speech in the audio signal is computer-generated; and/or performing a determination as to whether speech in the audio signal is generated by replaying a recording.

11. The method of any preceding claim, the method further comprising:
in response to receiving an initiation input at the user device, sending initiation information from the user device to a server;
displaying (310) the received string on the user device while the initiation input is being provided by the user; and
capturing the audio signal while the initiation input is being provided by the user.

12. A system for performing an authentication method, the system comprising one or more processors (905) configured to carry out the method of any one of claims 1 to 10.

13. The system of claim 12, the system further comprising a user device, the system further configured to carry out the method according to claim 11.

14. A computer program comprising instructions that, when executed by a processor, cause the processor to carry out the method of any one of claims 1 to 10.

## Patentansprüche

1. Computerimplementiertes Authentifizierungsverfahren, das Folgendes umfasst:
Erhalten (501) einer Zeichenfolge;
Empfangen (502) eines Audiosignals;
Durchführen von Spracherkennung (503) auf dem Audiosignal, um Text zu extrahieren; und
Durchführen von Authentifizierung (504) eines Benutzers, wobei die Authentifizierung Folgendes umfasst:
Vergleichen des extrahierten Texts und der Zeichenfolge; und
Durchführen von Sprachauthentifizierung des Benutzers basierend auf dem Audiosignal;
**dadurch gekennzeichnet, dass**
die Authentifizierung weiter Vergleichen (317) von Zeitablaufinformationen des Audiosignals mit Referenzzeitablaufinformationen umfasst, wobei der Benutzer nicht authentifiziert wird, wenn die Zeitablaufinformationen nicht den Referenzzeitablaufinformationen entsprechen.

2. Verfahren nach Anspruch 1, das weiter Folgendes umfasst:
Empfangen (307) von Einleitungsinformationen, wobei Vergleichen der Zeitablaufinformationen Identifizieren einer Zeitdifferenz zwischen einem Einleitungszeitpunkt und einem Zeitpunkt umfasst, zu dem das erste gesprochene Element im Audiosignal erfasst wird, wobei die Referenzzeitablaufinformationen einen vorgegebenen Schwellenwert umfassen und der Benutzer nicht authentifiziert wird, wenn die Zeitdifferenz länger als der vorgegebene Schwellenwert ist.

3. Verfahren nach Anspruch 2, das weiter Senden (309) der eindeutigen Zeichenfolge an eine Benutzervorrichtung umfasst, wobei der Einleitungszeitpunkt der Zeitpunkt ist, zu dem die eindeutige Zeichenfolge gesendet wird, wobei das Audiosignal optional als Echtzeit-Audiostrom von der Benutzervorrichtung empfangen wird.

4. Verfahren nach einem vorstehenden Anspruch, das weiter Folgendes umfasst:
Bestimmen, anhand des Audiosignals, der Zeitdauer, die der Benutzer benötigt, um den extrahierten Text auszusprechen, wobei die Referenzzeitablaufinformationen eine vorgegebene Zeitdauer umfassen, und wobei die Authentifizierung weiter Vergleichen der bestimmten Zeitdauer mit der vorgegebenen Zeitdauer umfasst, wobei der Benutzer nicht authentifiziert wird, wenn die bestimmte Zeitdauer länger als die vorgegebene Zeitdauer ist, wobei die vorgegebene Zeitdauer optional als eine geschätzte Zeit berechnet wird, die zum lauten Vorlesen der Zeichenfolge benötigt wird.

5. Verfahren nach einem vorstehenden Anspruch, wobei Vergleichen der Zeitinformationen Identifizieren eines Zeitdifferenzmusters zwischen einer Vielzahl von gesprochenen Elementen, die im Audiosignal erfasst werden, umfasst, wobei die Referenzzeitablaufinformationen ein vorgegebenes Zeitdifferenzmuster umfassen; und wobei der Benutzer nicht authentifiziert wird, wenn sich das Zeitdifferenzmuster von dem vorgegebenen Zeitdifferenzmuster unterscheidet.

6. Verfahren nach einem vorstehenden Anspruch, wobei das Verfahren weiter Folgendes umfasst:
Anweisen der Benutzervorrichtung, eine Oberfläche zum Einleiten einer Authentifizierung anzuzeigen, wobei die Benutzervorrichtung angewiesen wird, die Oberfläche nach Erhalt einer Transaktionsanforderung anzuzeigen.

7. Verfahren nach einem vorstehenden Anspruch, das weiter Senden der Zeichenfolge an die Benutzervorrichtung zur Anzeige auf der Benutzervorrichtung infolgedessen umfasst, dass Einleitungsinformationen von der Benutzervorrichtung empfangen werden; und das optional weiter Senden einer Anweisung an die Benutzervorrichtung umfasst, Anzeigen der Zeichenfolge zu beenden.

8. Verfahren nach einem vorstehenden Anspruch, das weiter Erzeugen (308) der eindeutigen Zeichenfolge unter Verwendung eines Algorithmus umfasst, der eine Einwegfunktion umfasst, wobei der Algorithmus zwei oder mehr numerische Eingaben entgegennimmt, wobei mindestens eine der Eingaben Informationen bezüglich einer Transaktion umfasst, für die eine Authentifizierung durchgeführt wird.

9. Verfahren nach einem der Ansprüche 1 bis 7, wobei die Zeichenfolge eine zufällige Ziffernfolge oder eine zufällige Phrase natürlicher Sprache umfasst.

10. Verfahren nach einem vorstehenden Anspruch, das weiter Durchführen einer Bestimmung umfasst, ob die Sprache im Audiosignal computergeneriert ist; und/oder Durchführen einer Bestimmung, ob Sprache im Audiosignal durch Wiedergabe einer Aufzeichnung erzeugt wird.

11. Verfahren nach einem vorstehenden Anspruch, wobei das Verfahren weiter Folgendes umfasst:
infolgedessen, dass eine Einleitungseingabe an der Benutzervorrichtung empfangen wird, Senden von Einleitungsinformationen von der Benutzervorrichtung an einen Server;
Anzeigen (310) der empfangenen Zeichenfolge auf der Benutzervorrichtung, während die Einleitungseingabe vom Benutzer bereitgestellt wird; und
Aufnehmen des Audiosignals, während die Einleitungseingabe vom Benutzer bereitgestellt wird.

12. System zum Durchführen eines Authentifizierungsverfahrens, wobei das System einen oder mehrere Prozessoren (905) umfasst, die dazu konfiguriert sind, das Verfahren nach einem der Ansprüche 1 bis 10 auszuführen.

13. System nach Anspruch 12, wobei das System weiter eine Benutzervorrichtung umfasst, wobei das System weiter dazu konfiguriert ist, das Verfahren nach Anspruch 11 auszuführen.

14. Computerprogramm, das Anweisungen umfasst, die, wenn sie von einem Prozessor ausgeführt werden, den Prozessor veranlassen, das Verfahren nach einem der Ansprüche 1 bis 10 auszuführen.

## Revendications

1. Procédé d'authentification implémenté par ordinateur, comprenant :
l'obtention (501) d'une chaîne ;
la réception (502) d'un signal audio ;
la réalisation d'une reconnaissance vocale (503) sur le signal audio pour extraire du texte ; et
la réalisation d'une authentification (504) d'un utilisateur, l'authentification comprenant :
la comparaison du texte extrait et la chaîne ; et
la réalisation d'une authentification vocale de l'utilisateur sur la base du signal audio ;
**caractérisé en ce que**
l'authentification comprend en outre la comparaison (317) d'informations de synchronisation du signal audio à des informations de synchronisation de référence, dans lequel l'utilisateur n'est pas authentifié si les informations de synchronisation ne satisfont pas les informations de synchronisation de référence.

2. Procédé selon la revendication 1, comprenant en outre :
la réception (307) d'informations d'initiation, dans lequel la comparaison des informations de synchronisation comprend l'identification d'une différence de temps entre une heure d'initiation et une heure à laquelle le premier élément parlé est détecté dans le signal audio, dans lequel les informations de synchronisation de référence comprennent un seuil prédéterminé et l'utilisateur n'est pas authentifié si la différence de temps est supérieure au seuil prédéterminé.

3. Procédé selon la revendication 2, comprenant en outre l'envoi (309) de la chaîne unique à un dispositif utilisateur, dans lequel l'heure d'initiation est l'heure à laquelle la chaîne unique est envoyée, dans lequel, facultativement, le signal audio est reçu sous la forme d'un flux audio en temps réel à partir du dispositif utilisateur.

4. Procédé selon une quelconque revendication précédente, comprenant en outre :
la détermination, à partir du signal audio, de la durée nécessaire à l'utilisateur pour prononcer le texte extrait, dans lequel les informations de synchronisation de référence comprennent une durée prédéterminée, et dans lequel l'authentification comprend en outre la comparaison de la durée déterminée à la durée prédéterminée, dans lequel si la durée déterminée est supérieure à la durée prédéterminée, l'utilisateur n'est pas authentifié, dans lequel, facultativement, la durée prédéterminée est calculée comme une estimation du temps nécessaire pour lire à voix haute la chaîne.

5. Procédé selon une quelconque revendication précédente, dans lequel la comparaison des informations de synchronisation comprend l'identification d'un modèle de différence de temps entre une pluralité d'éléments parlés détectés dans le signal audio, dans lequel les informations de synchronisation de référence comprennent un modèle de différence de temps prédéterminé ; et dans lequel l'utilisateur n'est pas authentifié si le modèle de différence de temps est différent du modèle de différence de temps prédéterminé.

6. Procédé selon une quelconque revendication précédente, dans lequel le procédé comprend en outre :
le fait de donner l'ordre au dispositif utilisateur de présenter une interface pour initier l'authentification, dans lequel le dispositif utilisateur est chargé de présenter l'interface après réception d'une demande de transaction.

7. Procédé selon une quelconque revendication précédente, comprenant en outre l'envoi de la chaîne au dispositif utilisateur pour l'afficher sur le dispositif utilisateur en réponse à la réception d'informations d'initiation provenant du dispositif utilisateur ; et, facultativement, comprenant en outre l'envoi d'une instruction au dispositif utilisateur pour arrêter l'affichage de la chaîne.

8. Procédé selon une quelconque revendication précédente, comprenant en outre la génération (308) de la chaîne unique à l'aide d'un algorithme comprenant une fonction unidirectionnelle, dans lequel l'algorithme prend deux ou plusieurs entrées numériques, dans lequel au moins l'une des entrées comprend des informations relatives à une transaction pour laquelle une authentification est réalisée.

9. Procédé selon l'une quelconque des revendications 1 à 7, dans lequel la chaîne comprend une séquence aléatoire de chiffres ou une phrase en langage naturel aléatoire.

10. Procédé selon une quelconque revendication précédente, comprenant en outre la réalisation d'une détermination permettant de savoir si la parole dans le signal audio est générée par ordinateur; et/ou la réalisation d'une détermination permettant de savoir si la parole dans le signal audio est générée en rejouant un enregistrement.

11. Procédé selon une quelconque revendication précédente, le procédé comprenant en outre :
en réponse à la réception d'une entrée d'initiation sur le dispositif utilisateur, l'envoi d'informations d'initiation du dispositif utilisateur à un serveur ;
l'affichage (310) de la chaîne reçue sur le dispositif utilisateur pendant que l'entrée d'initiation est fournie par l'utilisateur ; et
la capture du signal audio pendant que l'entrée d'initiation est fournie par l'utilisateur.

12. Système destiné à réaliser un procédé d'authentification, le système comprenant un ou plusieurs processeurs (905) configurés pour mettre en œuvre le procédé selon l'une quelconque des revendications 1 à 10.

13. Système selon la revendication 12, le système comprenant en outre un dispositif utilisateur, le système étant configuré en outre pour mettre en œuvre le procédé selon la revendication 11.

14. Programme informatique comprenant des instructions qui, lorsqu'elles sont exécutées par un processeur, amènent le processeur à mettre en œuvre le procédé selon l'une quelconque des revendications 1 à 10.
